# EUROPEAN PATENT APPLICATION

(11) **EP 2 469 466 A1**
(43) Date of publication of application: **27.06.2012**
(21) Application number: 10196223.1
(22) Date of filing: 21.12.2010
(51) Int. Cl.: G06Q 90/00

(54) **Remote management of industrial processes**

(71) Applicant: ABB Inc., Cary, NC 27518 (US)
(72) Inventor: Schroeder, John, Worthington, OH 43085 (US); Schuh, Lothar, 68723, Plankstadt (DE); Wnek, Maciej, 30-209, Krakow (PL)
(74) Representative: ABB Patent Attorneys

(57) **Abstract**

Systems and other embodiments for causing a service request to be produced are described. A system can comprise an analysis component that evaluates an information set to produce an evaluation result. The information set can include a first piece of information from a first information source and a second piece of information from a second information source. The system can also comprise a determination component that proactively makes a determination on if a service request should be produced, where the determination based, at least in part, on the evaluation result. The system can further comprise a production component that causes the service request to be produced in response to the determination being positive.

## Description

### BACKGROUND

The following generally relates to management of industrial processes and, more particularly, to remote management of industrial processes.

Currently, remote service of an industrial process is mostly reactionary and vendor-specific. An owner/operator of an industrial process typically initiates remote service by contacting a service provider only when a problem in the process is detected. By the time the service provider is contacted, the problem typically has already caused down-time and/or bad production quality, thereby making the diagnosis and correction of the problem urgent. The problem is typically with a system or a particular piece of equipment that is used to perform or control the production process, and, conventionally, the service provider is the manufacturer or distributor of the system or equipment that appears to be experiencing the problem. After the service provider is contacted, the service provider is typically only given remote access to the problematic equipment or system for a limited period of time (due to the urgency) to diagnose and if possible to fix the problem, either remotely or by dispatching local service personnel to the industrial process. If the problem is not in fact caused by the equipment or system of the contacted service provider, the other vendor of the problematic equipment or system must then be contacted by the owner/operator of the process. This is inefficient and causes delay in correcting the problem.

### SUMMARY

Aspects of the present application address these matters, and others.

According to one aspect, a system includes an analysis component that evaluates an information set to produce an evaluation result. The information set includes a first piece of information from a first information source and a second piece of information from a second information source. The system also includes a determination component that proactively makes a determination on if a service request should be produced. The determination can be based, at least in part, on the evaluation result. The system can further include a production component that causes the service request to be produced in response to the determination being positive.

According to another aspect, a system includes an evaluation component that analyzes a first information set from a first industrial process and a second information set from a second industrial process to produce an analysis result. The system also includes a generation determination component that proactively makes a determination on if a service request should be generated based, at least in part, on the analysis result.

According to yet another aspect, a method includes identifying a situation in a component of an industrial process. The method also includes determining a vendor associated with the component. The method further includes identifying an information set related to the situation. In addition, the method includes causing a notice to be issued to the vendor, where the notice identifies the situation and includes the information set.

Those skilled in the art will appreciate still other aspects of the present application upon reading and understanding the attached figures and description.

### FIGURES

The present application is illustrated by way of example and not limitation in the figures of the accompanying drawings, in which like references indicate similar elements and in which:
Figure 1 illustrates one embodiment of a system with an analysis component, a determination component, and a production component;
Figure 2 illustrates one embodiment of a system with an identification component and a management component;
Figure 3 illustrates one embodiment of a system with a collection component, an assessment component, a resolution component, and a retention component;
Figure 4 illustrates one embodiment of a system with a service request evaluation component and an information identification component;
Figure 5 illustrates one embodiment of a system with a service request evaluation component, a recognition component, and a transfer component;
Figure 6 illustrates one embodiment of a system with a monitor component and an extraction component;
Figure 7 illustrates one embodiment of a system with an evaluation component and a generation determination component;
Figure 8 illustrates one embodiment of a system with a creation component, a classification component, a destination component, and a transfer component;
Figure 9 illustrates one embodiment of a system with an access component;
Figure 10 illustrates one embodiment of a system with a service command center, three plants, and two vendors; and
Figure 11 illustrates one embodiment of a method that causes a notice to be issued.

### DESCRIPTION

A company can use an industrial process to make a product. The industrial process can include hardware, software, and firmware modules. These modules can be supplied by different vendors and can be combined together for form the industrial process. In one example, a paper maker can have two plants for making paper. The plants can make paper of a same grade and/or the plants can make paper of different grades. For example, a first plant can make writing paper while a second plant makes corrugated paper. These plants can include different modules, such as modules for loading pulp, performing pressing, and others.

Operation of the first plant and the second plant can be observed. Based on this observation, various determinations can be made. For example, feedback from these plants can be used to make a determination that software in a controller at the first plant can be improved. A service request can be produced that facilitates improving the controller software. For example, the service request is sent to an experienced technician who can remotely improve the controller. The service request can include an instruction to improve the controller, information relevant in performing the improvement, and a limited remote access that enables the technician to remotely access the controller. Thus, a technician can remotely improve the controller while being provided limited remote access.

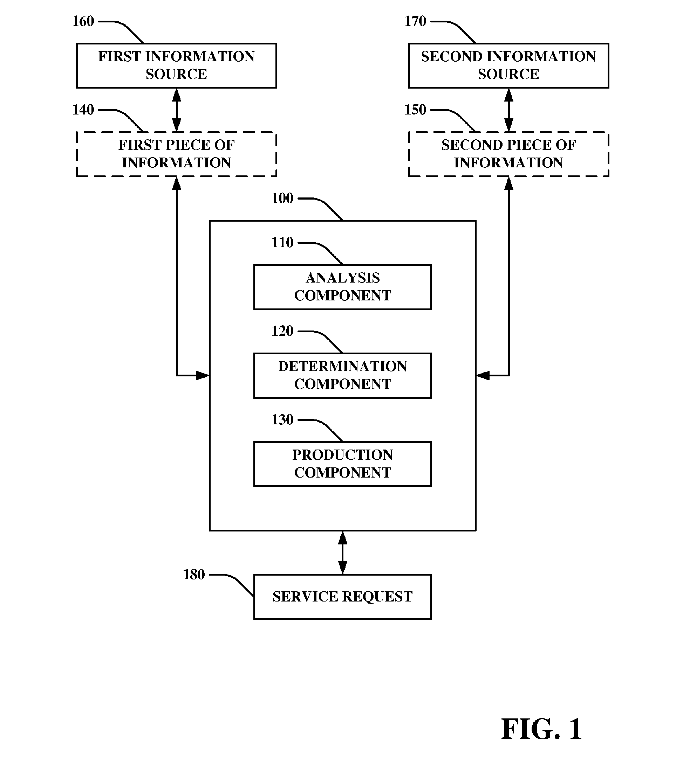

As used herein, the term 'component' can refer to software, hardware, firmware, software in execution, or a combination thereof. In one example, a processor can function as a component. For example, with reference to Figure 1, the analysis component 110, determination component 120 and production component 130 can function as one processor, as three separate processors, and other configurations. In another example, these components can be instruction sets retained on at least one computer-readable storage medium such as physical memory. Additionally or alternatively, at least one instruction set can be carried in other computer-readable medium (or non-computer-readable storage medium) such in a carrier wave or signal. The components can include the instruction sets and/or the computer-readable medium(s).

Figure 1 illustrates one embodiment of a system 100 with an analysis component 110, a determination component 120, and a production component 130. The system 100 can collect a first piece of information 140 and a second piece of information 150. The first piece of information can be produced from a first information source 160 while the second piece of information 150 can be produced from a second information source 170. While Figure 1 illustrates the first information source 160 and the second information source 170, it is to be appreciated that the system 100 can function in an environment with less than or more than two information sources.

In one embodiment, the first information source 160 can be associated with a first industrial process and the second information source 170 can be associated with a second industrial process. The first industrial process and the second industrial process can be identical processes (e.g., both making paper), similar industrial processes (e.g., one making writing paper and one making corrugated paper), or different industrial processes (e.g., one making paper and the other making automobile parts). Example industrial processes can include automobile manufacturing, paper making, petroleum refining, pharmaceutical and/or chemical production, power generation, off-shore drilling, iron ore mining, extracting of natural resources, and others. Example modules that can be used in an industrial process can include reactors, heat exchangers, pumps, valves, motors, drives, switches, transformers, actuators, transmitters, sensors, control systems, controllers, mechanical equipment, and others.

In one example, a vendor can sell industrial controllers and the first information source 160 can include a first industrial controller from the vendor and the second information source 170 can include a second industrial controller from the vendor. By virtue of including industrial controllers from the vendor, the first information source 160 is associated with a vendor and the second information source 170 is also associated with the vendor.

The analysis component 110 can evaluate an information set to produce an evaluation result, where the information set includes the first piece of information 140 from the first information source 160 and the second piece of information 150 from a second information source 170. For example, the information set can reside on a database and include information from various industrial processes, various portions from one industrial process, and others. The analysis component 110 can access the database and evaluate the information set to produce the evaluation result.

The determination component 120 can proactively make a determination on if a service request 180 should be produced, where the determination is based, at least in part, on the evaluation result. In response to the determination being positive, the production component 130 can cause the service request 180 to be produced. In one embodiment, the analysis component 110 proactively evaluates the information set and/or the production component proactively causes the service request 180 to be produced. It is to be appreciated that other aspects disclosed herein can be performed proactively (e.g., proactively transferring the service request 180 to a preferred destination).

The service request 180 can include various types of information. For example, the service request 180 can include information on what aspect of an information source should have service provided, include limited remote access to that aspect, information on how to perform service on the aspect, information on what causes the service request to be recommended, data associated with the aspect, and others.

In one example, the evaluation result identifies at least one entity that should be involved with the service request 180. The service request 180 can be caused to transfer to the at least one entity (e.g., the production component 130 can cause the service request 180 to transfer to the entity.) For example, the analysis component 110 can evaluate the information set and determine that software in the first information source 160 is experiencing a failure as well as determine that the software is supplied by 'vendor A.' The determination component 120 can determine that the failure is something that should be corrected and that the correction can be made by a technician associated with 'vendor A.' A service request 180 can be generated and sent by the production component 130 to 'vendor A.' The service request 180 can facilitate the technician associated with 'vendor A' to have limited remote access. The limited remote access can be configured to supply the technician associated with 'vendor A' with access to the software while protecting proprietary information, software associated with other vendors, and others. One example of limited remote access can be limited, secure, and managed remote access.

The service request 180 can be produced to improve an aspect, make a correction, fix an error, update an aspect, and others. In one embodiment the service request 180 is an instruction to perform a repair at a location related to at least one of the first information source 160 and the second information source 170. In one embodiment, the service request 180 is an instruction to perform a recommended operation upon a location related to at least one of the first information source 160 and the second information source 170. In one embodiment, the service request 180 is an instruction to modify management of an aspect for a device, where the device is associated with at least one of the first information source 160 or the second information source 170. Management of the aspect can include what type of technician should work on the aspect, what parties should be involved when working on the aspect, how the device should be classified, and others. A location related to at least one of the first information source 160 and the second information source 170 can at least include a location related to the first information source 160, a location related to the second information source 170, or a location related to the first information source 160 as well as the second information source 170.

In one embodiment, the service request 180 includes vendor specific information, such as how a vender module interacts with other modules at the first information source 160 and/or the second information source 170. Vendor specific information can include access to modules on various industrial processes provided by the vendor. For example, the first information source 160 can include a first controller from the vendor while the second information source 170 includes a second controller from the vendor. The first controller and second controller can be the same model of controller. The first controller can experience an error and the service request 180 can provide information for the first controller and the second controller to the vendor.

In one embodiment, the first information source 160 is associated with a first vendor while the second information source 170 is associated with a second vendor, where the first vendor and second vendor are different vendors. For example, the first information source 160 and the second information source 170 can be part of one industrial process. The first information source 160 can be a software module from the first vendor while the second information source 170 can be a software module from the second vendor. The system 100 can determine that the software module from the first vendor is performing in a superior manner in comparison to the software module from the second vendor. The system 100 can cause a service request 180 to be produced that requests the second vendor to replace or update a software module to gain comparable performance as a performance of the software module from the first vendor.

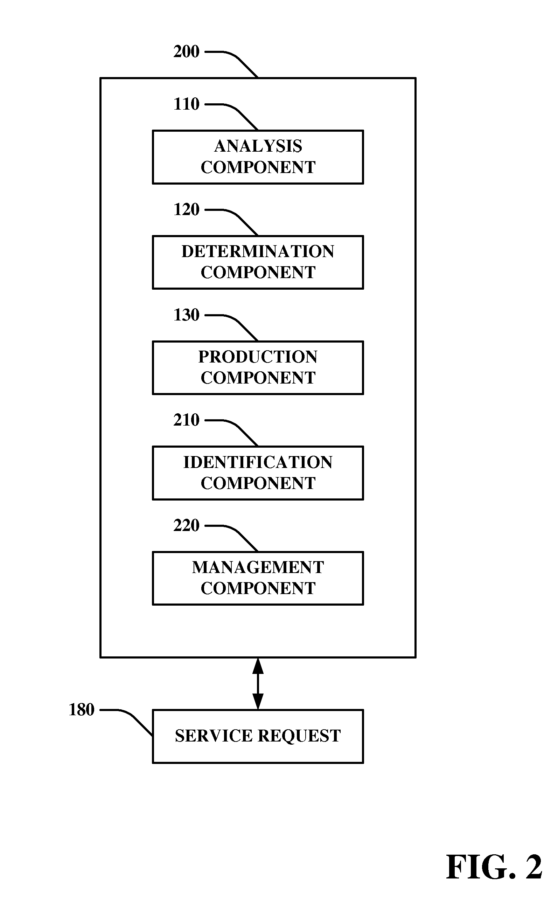

Figure 2 illustrates one embodiment of a system 200 with an identification component 210 and a management component 220. The system 200 includes the analysis component 110, the determination component 120, and the production component 130 in addition to the identification component 210 and the management component 220. The service request 180 can be produced by the production component 130. The analysis component 110 can analyze operation of the production component 130 to determine what kind of remote access should be granted and/or to what party the remote access should be granted. The identification component 210 can identify a remote access associated with the service request 180. For example, the remote access can be a limited remote access provided to a vendor for operation on a firmware designated for updating. The management component 220 can cause the remote access to be granted. For example, the management component associated the limited remote access with the service request 180 and then the production component 130 sends the service request with the limited remote access to the vendor.

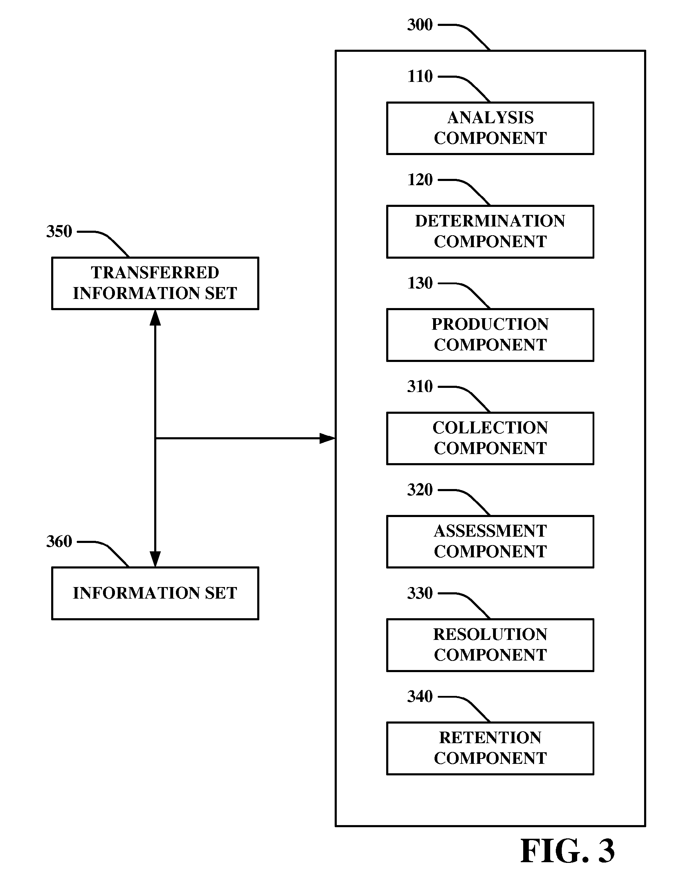

Figure 3 illustrates one embodiment of a system 300 with a collection component 310, an assessment component 320, a resolution component 330, and a retention component 340. The system 300 also includes the analysis component 110, the determination component 120, and the production component 130. A transferred information set 350 can be sent to the system 300. For example, various information sources can produce a relatively large quantity of information. If every piece of information is retained, then the system 300 may become overloaded with information such that producing a service request 180 of Figure 1 from the production component 130 may become undesirably time consuming. Therefore, the system 300 can be employed to limit information retained in database used by the system 100 of Figure 1. For example, unnecessary information, redundant information, and other information can be selected to not be retained while other information can be saved.

An information source can send a transferred information set 350 to the system 300. The transferred information set 350 can be, at least in part, from at least one of the first information source 160 of Figure 1 or the second information source 170 of Figure 1. The collection component 310 obtains the transferred information set 350. The assessment component 320 examines the transferred information set 350 to produce an examination result. For example, the assessment component 320 can compare information of the transferred information set 350 with information stored in a command center database to determine if redundancy occurs.

Based, at least in part, on the examination result, the resolution component 330 makes a decision on if at least part of the transferred information set 350 should be retained as part of an information set 360. In response to the decision being positive, at least part of the transferred information set 350 becomes a designated information set that is designated to be part of the information set 360 (e.g., designated to become part of the command center database and used in determining if the service request 180 of Figure 1 should be generated). The retention component 340 causes the designated information set to become part of the information set 360. The information set 360 can be used to determine if the service request 180 should be produced.

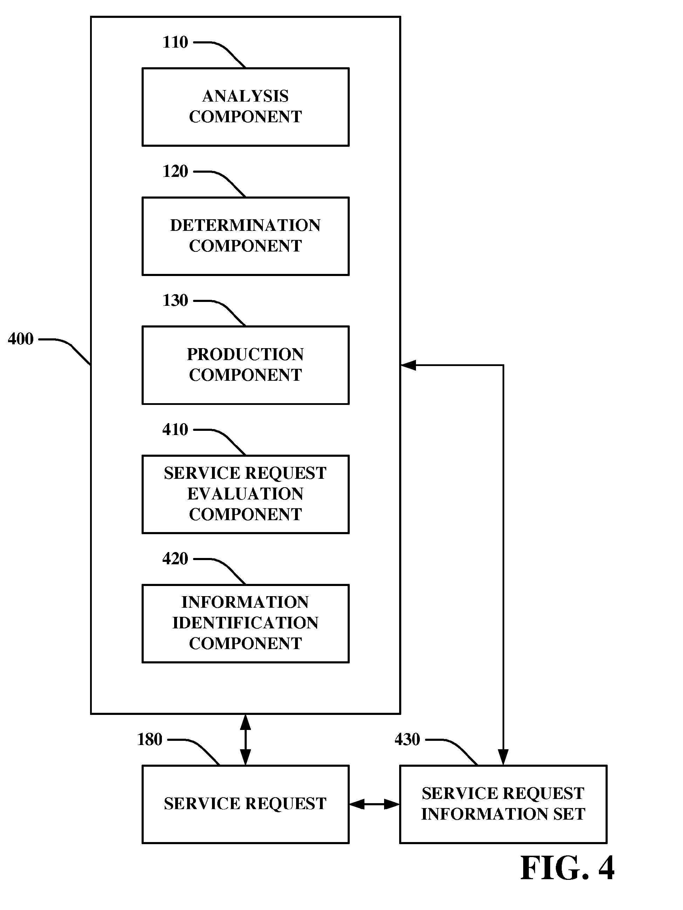

Figure 4 illustrates one embodiment of a system 400 with a service request evaluation component 410 and an information identification component 420. The system 400 also includes the analysis component 110, the determination component 120, and the production component 130. The production component 130 can produce a service request 180. The service request 180 can be designated for transfer to a specific location. For example, the service request 180 can be designated to be sent to a technician abroad. The system 400 can evaluate the service request 180 and/or available information to create a service request information set 430.

The service request evaluation component 410 analyzes the service request 180 to produce a service request analysis result. The information identification component 420 selects the service request information set 430 to be presented along with the service request 180. Selection of the service request information set 430 is based, at least in part, on the service request analysis result. The service request 180 along with the service request information set 430 can be transferred to a designated location. Example information that can be included in the service request information set 430 can include why the service request 180 is created, metadata related to a cause for generation of the service request 180, an instruction on what to perform in relation to the service request 180, information that facilitates limited remote access, and other information. In one embodiment, the service request information set 430 becomes part of the service request 180. The service request 180 integrated with the service request information set 430 can be sent to a destination.

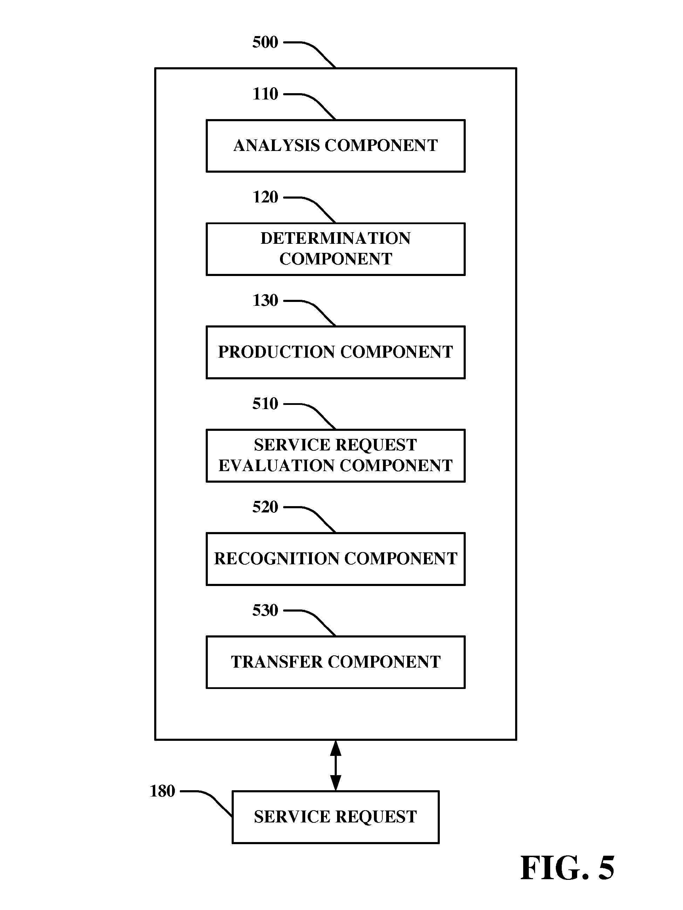

Figure 5 illustrates one embodiment of a system 500 with a service request evaluation component 510, a recognition component 520, and a transfer component 530. The system 500 includes the analysis component 110, the determination component 120, and the production component 130. The system 500 can function to determine a preferred destination for the service request 180. In one example environment, if an error occurs, multiple destinations can be equipped to correct the error. For example, a vendor may have multiple technicians that handle the error or multiple vendors can be equipped to correct the error, so multiple potential destinations may be available. The system 500 can determine a preferred destination for the service request 180. In one embodiment, the preferred destination is an optimal or best destination. The preferred destination to which the service request 180 is sent can include at least one vendor, a customer in-house service team, and others.

The service request evaluation component 510 can analyze the service request 180 to produce a service request analysis result. In addition, the service request evaluation component 510 can evaluate other relevant data that can influence the service request analysis result. For example, the service request 180 can be compared against expertise of different technicians and based on this expertise the technician can be selected as a preferred destination.

The recognition component 520 makes an identification of a preferred destination for the service request 180, where the identification is based, at least in part, on the service request analysis result. The transfer component 530 causes the service request 180 to be transferred to the preferred destination.

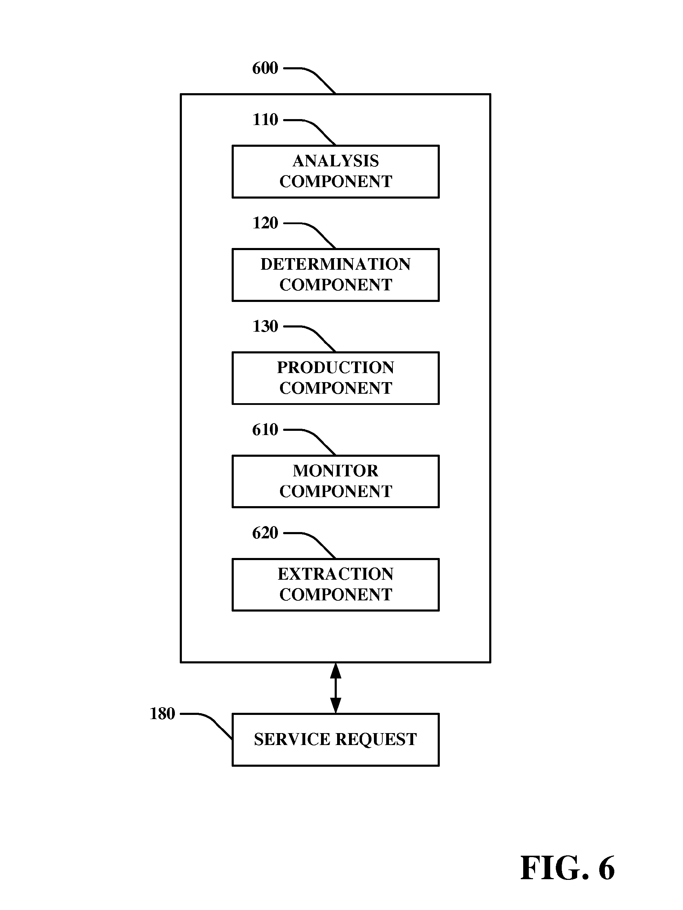

Figure 6 illustrates one embodiment of a system 600 with a monitor component 610 and an extraction component 620. The system 600 also includes an analysis component 110, a determination component 120, and a production component 130. As an industrial process operates, the industrial process can be monitored (e.g., automatically monitored, monitored by a technician, and others). This monitoring can produce pieces of information and these pieces of information can be used to determine if the service request 180 should be produced.

The monitor component 610 makes an observation on at least one of the first information source 160 of Figure 1 or the second information source 170 of Figure 1. The extraction component 620 identifies a piece of information to be part of the information set based, at least in part, on the observation. In one example, a technician can use the monitor component 610 to observe operation of an industrial process. The monitor component 610 can indicate that an error occurred at a specific location of the industrial process. The technician can use the extraction component 620 to identify a module associated with the error, identify that the service request 180 should be produced, and perform other actions.

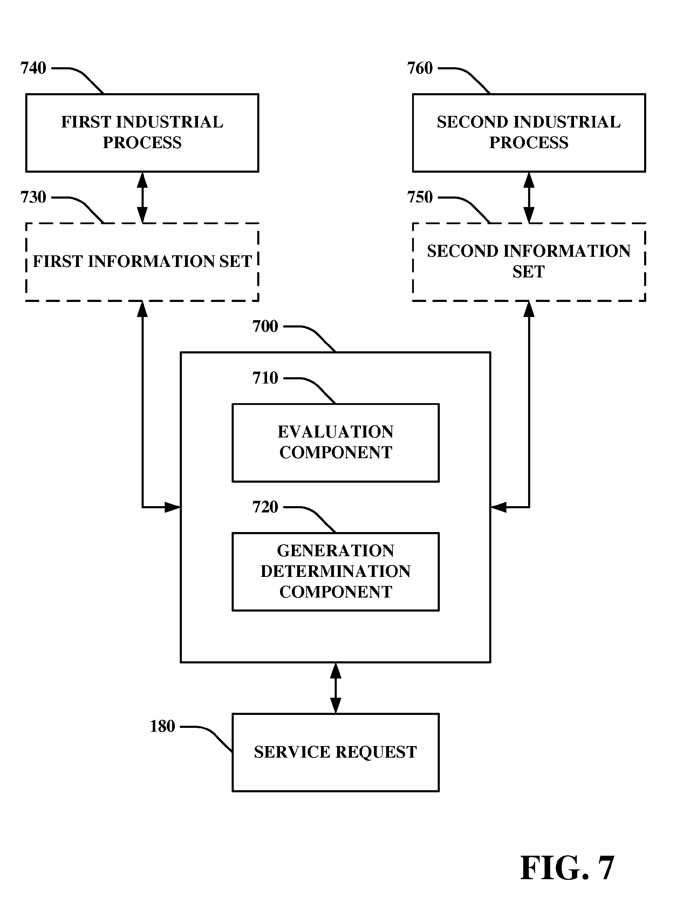

Figure 7 illustrates one embodiment of a system 700 with an evaluation component 710 and a generation determination component 720. The system 700 can collect a first information set 730 produced from a first industrial process 740 and a second information set 750 produced from a second industrial process 760. Based on these information sets, a determination can be made on if a service request 180 should be generated.

The evaluation component 710 analyzes the first information set 730 from the first industrial process 740 and the second information set 750 from the second industrial process 760 to produce an analysis result. The generation determination component 720 proactively makes a determination on if the service request 180 should be generated based, at least in part, on the analysis result.

For example, the first industrial process 740 and the second industrial process 760 can each include a controller of the same model. The evaluation component 710 can compare operation of the controllers. If the comparison shows that the controllers are behaving in a similar manner, then a determination can be made that the service request 180 should not be generated (e.g., an inference is drawn that the service request 180 is not appropriate). However, if the comparison shows that the controllers are behaving in a dissimilar manner, then the system 700 can gather information to determine if either controller is functioning in error. If a controller is functioning in error, then the generation determination component 720 can determine if the error is substantial enough to warrant generation of the service request 180, determine what content the service request 180 should have, and others.

In one embodiment, the first industrial process 740 and the second industrial process 760 perform essentially the same process at different physical locations. For example, the first industrial process 740 can be a paper making process in Texas while the second industrial process 760 can be a paper making process in Ohio. In this example, the Texas process and Ohio process can both make writing paper or the Texas process can make writing paper while the Ohio process makes corrugated paper.

In one embodiment, the first industrial process 740 and the second industrial process 760 are different industrial processes. In one embodiment, the first industrial process 740 and the second industrial process 760 occur at the same physical location (e.g., within one physical plant). In one embodiment, the system 700 actively and/or passively collects the first information set 730 and/or the second information set 750. In one embodiment, the system 700 includes at least one of the analysis component 110 of Figure 1, the determination component 120 of Figure 1, or the production component 130 of Figure 1.

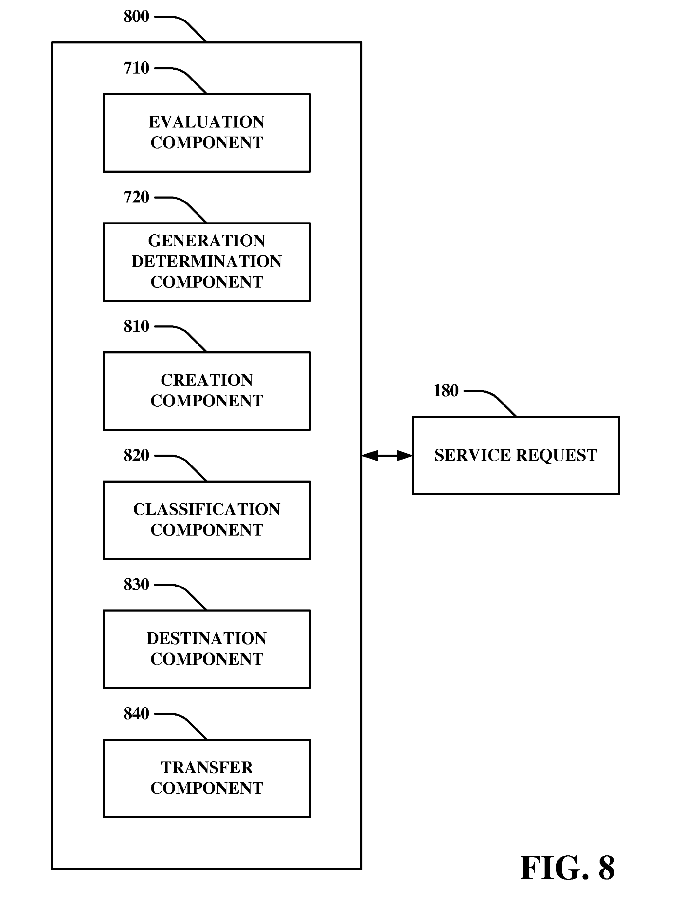

Figure 8 illustrates one embodiment of a system 800 with a creation component 810, a classification component 820, a destination component 830, and a transfer component 840. The system 800 also includes the evaluation component 710 and the generation determination component 720. The creation component 810 produces the service request 180 in response to a determination from the generation determination component 720 being positive. The classification component 820 identifies an information set associated with the service request 180 to be sent with the service request 180. The destination component 830 determines a destination for the service request 180 (e.g., a preferred destination for the service request 180). The transfer component 840 causes the service request 180 and the information set to transfer to the destination.

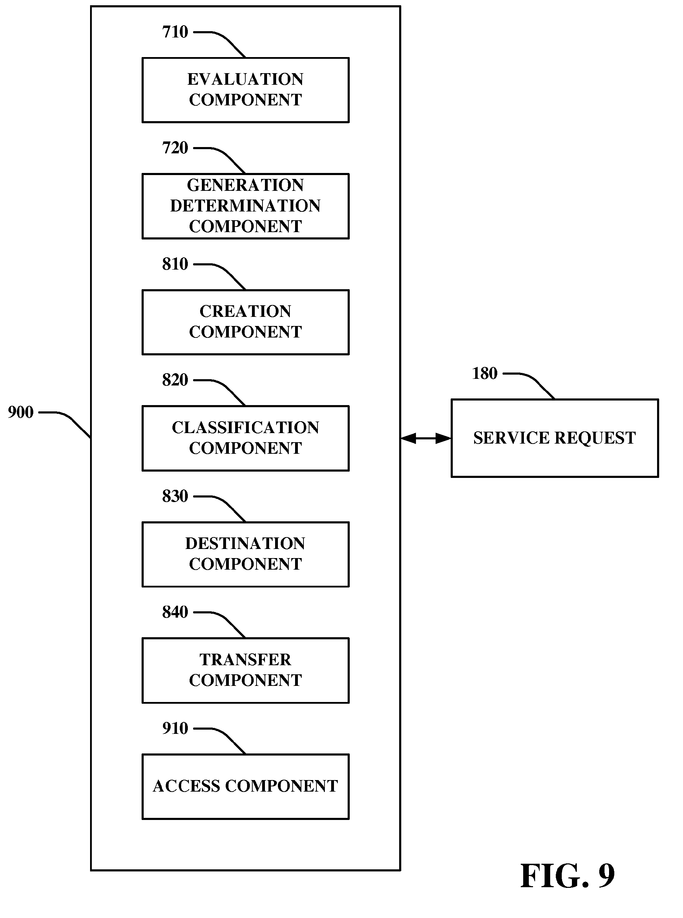

Figure 9 illustrates one embodiment of a system 900 with an access component 910. The system 900 also includes the evaluation component 710, the generation determination component 720, the creation component 810, the classification component 820, the destination component 830, and the transfer component 840. The destination component 830 can determine a destination for a service request 180. For example, the determination can be that a third-party consulting firm should receive the service request 180 in an attempt to improve operation of a module that is part of an industrial process. However, the third-party consulting firm may be an independent contractor that works with other companies, including companies that are competitors to the operator of the industrial process. Therefore, the access component 910 can function restrict the amount of access the third-party consulting firm has to aspects of the industrial process.

The access component 910 causes the destination to have limited remote access associated with the service request 180. In one embodiment, the service request 180, the information set identified by the classification component 820, and remote access data (e.g., software that provided restricted remote access) are disclosed at the destination in a visual construct (e.g., as part of a service enterprise dashboard). In one embodiment, the evaluation component 710 evaluates the service request 180 to produce a service request evaluation result and the access component 910 uses the service request evaluation result to determine the limited remote access that the service request 180 provides to the destination.

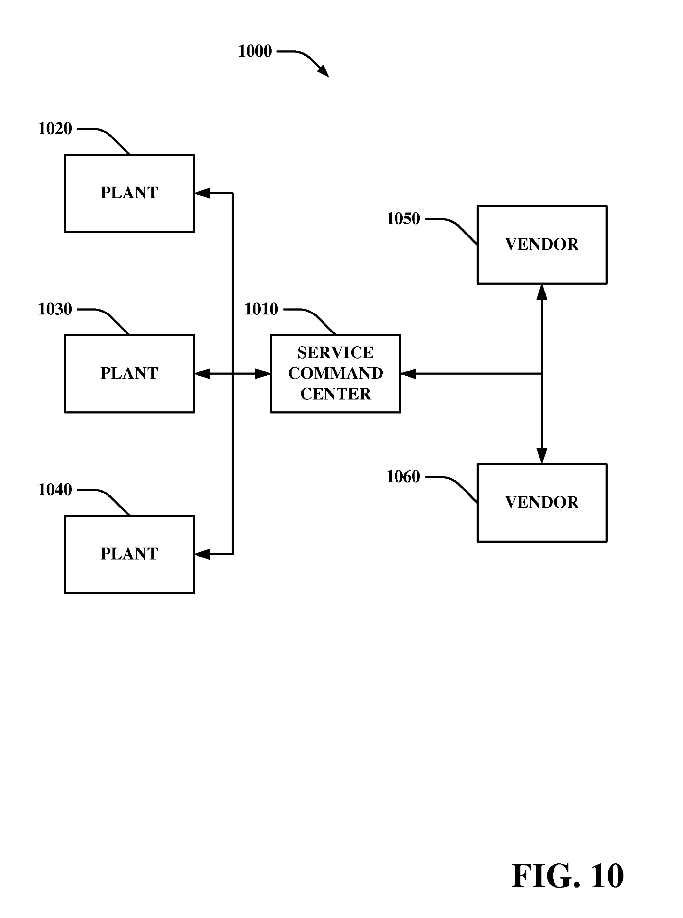

Figure 10 illustrates one embodiment of a system 1000 with a service command center 1010; three plants 1020, 1030, and 1040; and two vendors 1050 and 1060. While the system 1000 illustrates three plants and two vendors that communicate with the service command center 1010, it is to be appreciated that other numerical combinations of plants and vendors communicating with the service command center 1010 can be practiced (e.g., one plant and one vendor, four plants and one vendor, one plant and three vendors, four plants and four vendors, and others). The service command center 1010 can include a database and function as an information manager. The three plants 1020, 1030, and 1040 can send information to the service command center 1010 and the service command center 1010 can selectively store the information. If a situation arises, the service command center 1010 can identify at least one of the two vendors 1050 and 1060 as an appropriate party to handle the situation. The service command center 1010 can cause appropriate information to be transferred to the identified vendor and provide the identified vendor with limited remote access based on the situation. In one embodiment, the service command center 1010 is software that is retained on a customer's hardware (e.g., a server of a customer that runs at least one of the plants 1020, 1030, or 1040). In one embodiment, the service command center 1010 is software that is retained on a third-party server.

In one embodiment, the service command center 1010 includes at least three hierarchical levels: a plant level, an enterprise level, and a vendor level. The service command center 1010 can be located at a site of one of the plants 1020, 1030, or 1040; be remote from the plants 1020, 1030, and 1040; be distributed among the plants 1020, 1030, or 1040 and other locations, and others. The service command center 1010 can retain at least part of at least one component disclosed herein. For example, the service command center 1010 can retain the analysis component 110, the determination component 120, and the production component 130 of Figure 1 as well as the evaluation component 710 and the generation determination component 720 of Figure 7.

The service command center 1010 can include various functionality and aspects. The service command center 1010 can retain business information, such as production information, overall productivity, efficiency, and others. The service command center 1010 can cause an enterprise service dashboard to present information to a vendor 1050 and/or 1060. The service command center 1010 can perform service management (e.g., determine which vendor 1050 or 1060 should be contacted) and asset management (e.g., compare device classes among the plants 1020, 1030, and 1040). The service command center 1010 can include software and security components as well as provide application support to the plants 1020, 1030, and 1040.

The service command center 1010 can cause information to be presented to at least one of the vendors 1050 or 1060 by way of an enterprise service dashboard. The enterprise service dashboard can notify the vendors 1050 or 1060 of a situation, why a situation occurred, and other information. The enterprise service dashboard can enable a technician to view a high level system (e.g., plants 1020, 1030, and 1040) and go down into more specific levels (e.g., one of the plants 1020, 1030, and 1040, a sub-system, a component, and others) and perform root-cause analysis. In one example, in reference to Figure 1, the enterprise service dashboard can present the first piece of information 140, the second piece of information 150, and the service request 180 to a vendor 1050 or 1060. The vendors 1050 and 1060 can be suppliers of a component of a plant 1020, 1030, or 1040; third-parties assigned to manage the component; and others.

In one embodiment, a plant, for example plant 1020, is a source of information and sends an information set to the service command center 1010. For example, the plant can send an alert, a KPI (Key Performance Indicator) of a key parameter (e.g., is production rate at or below target), and/or key data as an information set to the service command center 1010. The service command center 1010 can send at least a sub-set of the information set to a vendor, such as vendor 1050. In one embodiment, the service command center 1010 transfers at least part of the information set provided by at least one plant 1020, 1030, or 1040 to at least one vendor 1050 or 1060.

The plants 1020, 1030, and 1040 can include conductivity software that allows the information set to be gathered and transfer to the service command center 1010 as well as to facilitate remote access (e.g., by at least one of the vendors 1050 or 1060). The information set can be selective data (e.g., data deemed relevant to a problem) and a data collector of the service command center 1010 can collect and analyze the information set. The plants 1020, 1030, and 1040 can perform active monitoring. For example, plant 1020 can proactively monitor KPIs of plant 1020 and if a KPI goes below a threshold, then an alert and other data can be proactively generated and transferred to the service command center 1010.

In one example, a problem can occur at plant 1020. The service command center 1010 can operate to resolve the problem at plant 1020. In addition, the service command center 1010 can proactively operate to attempt to stop the problem from occurring at plants 1030 and 1040. In one embodiment, plants 1020, 1030, and 1040 are run by the same company. In one embodiment, plants 1020, 1030, and 1040 are run by different companies. In this embodiment, the service command center 1010 can function to prevent information from plant 1020 from reaching a vendor not associated with plant 1020 while still using the information to service plants 1030 and 1040. In one example, vendor 1050 can sell a component to different companies and this component can be part of plants 1020, 1030, and 1040. Information on how the component operates in plant 1020 can be used to improve component operation in plants 1030 and 1040.

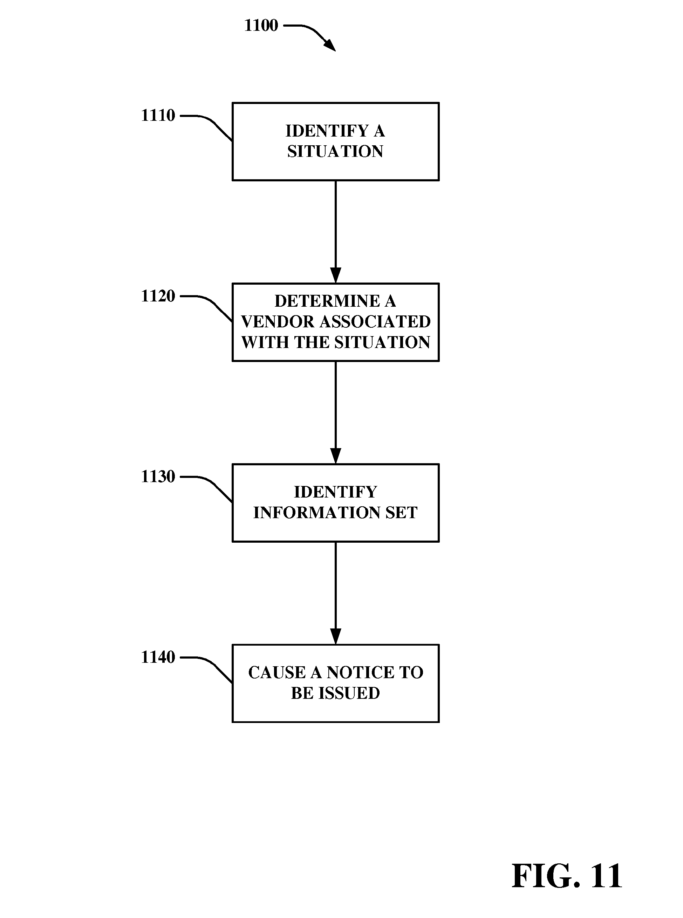

Figure 11 illustrates one embodiment of a method 1100 that causes a notice to be issued. At 1110, a situation is identified in a component of an industrial process. Example situations can include that an aspect of the industrial process is in error, an aspect of the industrial process can benefit from an update, a new aspect should be added to the industrial process, an aspect should be removed from the industrial process, an aspect should be replaced in the industrial process, an aspect should be reviewed by a technician in the industrial process, and others. At 1120, a vendor associated with the component can be determined. For example, information about the component can be available in a database including a vendor authorized to service the component and the database can be accessed to identify the vendor.

At 1130, identifying an information set related to the situation occurs. As part of the identification, at least part of a database of information can be evaluated. Based on this evaluation, information can be selected to be part of the information set. Example information can include what causes the situation, metadata related to the component, and other information. At 1140, the notice can be caused to be issued to the vendor. The notice can identify the situation and includes the information set. In one embodiment, the notice provides the vendor with remote access to the component. This remote access can be limited in scope with regard to at least one of the component or the situation. An example of limited scope with regard to the component can be that remote access is provided to the component and no other component. An example of limited scope with regard to the situation is that part of the component and related components can be provided such that the situation can be resolved. A scope of limitation can be determined on a case-by-case basis.

In one embodiment, remote access can be initially set to a first level of limitation and then the first level can be selectively changed. For example, a limited remote access can be granted to a vendor. However, the limited remote access can be too limited and the vendor can be unable to solve the situation. A determination can be made as to what further access the vendor should be provided to solve the situation and this further access can be granted. In one embodiment, if the further access is more access than what someone is comfortable giving the vendor, then the solution can be handled in-house.

The above may be implemented by way of computer readable instructions, which when executed by a computer processor(s), cause the processor(s) to carry out the described techniques. In such a case, the instructions are stored in a computer readable storage medium associated with or otherwise accessible to the relevant computer.

Of course, modifications and alterations will occur to others upon reading and understanding the preceding description. It is intended that the invention be construed as including all such modifications and alterations insofar as they come within the scope of the appended claims or the equivalents thereof.

## Claims

1. A system, comprising:
an analysis component that evaluates an information set to produce an evaluation result, where the information set includes a first piece of information from a first information source and a second piece of information from a second information source;
a determination component that proactively makes a determination on if a service request should be produced, where the determination is based, at least in part, on the evaluation result; and
a production component that causes the service request to be produced in response to the determination being positive.

2. The system of claim 1, comprising:
an identification component that identifies a remote access associated with the service request; and
a management component that causes the remote access to be granted.

3. The system of claim 1 comprising:
a collection component that obtains a transferred information set, where the transferred information set is, at least in part, from at least one of the first information source or the second information source;
an assessment component that examines the transferred information set to produce an examination result;
a resolution component that makes a decision on if at least part of the transferred information set should be retained as part of the information set, where the decision is based, at least in part, on the examination result and where, in response to the decision being positive, at least part of the transferred information set becomes a designated information set that is designated to be part of the information set; and
a retention component that causes the designated information set to become part of the information set.

4. The system of claim 1, where the first information source is associated with a first industrial process and where the second information source is associated with a second industrial process.

5. The system of claim 1, where the service request is an instruction to perform a repair at a location related to at least one of the first information source and the second information source.

6. The system of claim 1, where the service request is an instruction to perform a recommended operation upon a location related to at least one of the first information source and the second information source.

7. The system of claim 1, comprising:
a service request evaluation component that analyzes the service request to produce a service request analysis result; and
an information identification component that selects a service request information set to be presented along with the service request, where selection of the service request information set is based, at least in part, on the service request analysis result.

8. The system of claim 1, comprising:
a service request evaluation component that analyzes the service request to produce a service request analysis result;
an recognition component that makes an identification of a preferred destination for the service request, where the identification is based, at least in part, on the service request analysis result; and
a transfer component that causes the service request to be transferred to the preferred destination.

9. The system of claim 1, where the first information source is associated with a vendor and where the second information source is associated with the vendor.

10. The system of claim 1, where the first information source is associated with a first vendor, where the second information source is associated with a second vendor, and where the first vendor and second vendor are different vendors.

11. The system of claim 1, where the service request includes vendor specific information.

12. The system of claim 1, where the evaluation result identifies at least one entity that should be involved with the service request and where the service request is caused to transfer to the at least one entity.

13. The system of claim 1, comprising:
a monitor component that makes an observation on at least one of the first information source or the second information source; and
an extraction component that identifies a piece of information to be part of the information set based, at least in part, on the observation.

14. The system of claim 1, where the service request is an instruction to modify management of an aspect for a device, where the device is associated with at least one of the first information source or the second information source.

15. A system, comprising:
an evaluation component that analyzes a first information set from a first industrial process and a second information set from a second industrial process to produce an analysis result; and
a generation determination component that proactively makes a determination on if a service request should be generated based, at least in part, on the analysis result.

16. The system of claim 15, comprising:
a creation component that produces the service request in response to the determination being positive;
a classification component that identifies an information set associated with the service request to be sent with the service request;
a destination component that determines a destination for the service request; and
a transfer component that causes the service request and the information set to transfer to the destination.

17. The system of claim 16, comprising:
an access component that causes the destination to have limited remote access associated with the service request; where the service request, the information set, and remote access data are disclosed at the destination in a visual construct.

18. The system of claim 15, where the first industrial process and the second industrial process perform essentially the same process at different physical locations.

19. A method, comprising:
identifying a situation in a component of an industrial process;
determining a vendor associated with the component;
identifying an information set related to the situation; and
causing a notice to be issued to the vendor, where the notice identifies the situation and includes the information set.

20. The system of claim 19, where the notice provides the vendor with remote access to the component and where the remote access is limited in scope with regard to at least one of the component or the situation.
